# EUROPEAN PATENT SPECIFICATION

(11) **EP 1 785 339 B1**
(45) Date of publication and mention of the grant of the patent: **06.11.2013**
(21) Application number: 06123730.1
(22) Date of filing: 09.11.2006
(51) Int. Cl.: B62D 33/07, B62D 33/067, G07C 9/00, B60R 25/00

(54) **System for controlling the tilting function of a cab of a motor vehicle preventing unauthorized cab-tilt operations, a motor vehicle comprising such system, a corresponding method of controlling a cab tilting function and a computer program and a computer readable medium therefore**
System zum Steuern der Kippfunktion des Fahrerhauses eines Motorfahrzeugs zum Verhindern unerlaubten Kippens, ein Motorfahrzeug mit einem derartigen System, ein entsprechendes Verfahren, ein Computerprogramm dafür und ein maschinenlesbarer Datenträger mit einem derartigen Computerprogramm
Système de commande d'une fonction pour basculer une cabine d'un véhicule automobile pour empêcher le basculement non autorisé, un procédé correspondant, un programme réalisant le procédé et un support de données comprennant un tel programme

(30) Priority: 10.11.2005 SE 0502483
(43) Date of publication of application: 16.05.2007
(73) Proprietor: Scania CV AB, 151 87 Södertälje (SE)
(72) Inventor: Bergsten, Fredrik, 155 34 Nykvarn (SE); Stafner, Sven, 192 73 Sollentuna (SE)
(74) Representative: Thum, Bernhard

(56) References cited:
- EP-A- 1 593 555
- WO-A1-97/30874
- FR-A- 2 584 034
- KR-A- 2003 076 798
- US-A- 3 706 470
- US-A- 4 440 252
- US-A- 5 841 363
- US-A- 5 869 908
- US-B1- 6 658 328

## Description

### THE BACKGROUND OF THE INVENTION AND PRIOR ART

The present invention relates generally to detection of illicit tilting of the driver's cab of a motor vehicle. More particularly the invention relates to a system and a motor vehicle. The invention also relates to a method of controlling a tilting function, a computer program and a computer readable medium.

In order to prevent unauthorized access to the vital parts of a motor vehicle it is desirable that these parts are arranged, such that they are as physically inaccessible as possible. In a vehicle equipped with a tiltable driver's cab, this normally means that the engine and its most important control units are placed under the cab. The cab tilt function is then associated with some kind of alarm and/or lock mechanism, so that any units arranged there under can only be manipulated by authorized personnel having the necessary alarm deactivation means and/or keys respectively at their disposal.

The prior art includes many examples of solutions aiming at preventing unauthorized access to either vehicle itself, or any components thereof located under its driver's cab.

For instance, US 5,869,908 describes a system wherein a key/vehicle communication device and a lock control activation of an immobilizing device. A key-side actuating member cooperates with a vehicle-side control unit, such that the system can determine whether an authorized key has been inserted. If so, the immobilizing function is disabled, and the vehicle's engine is allowed to be started. However, no cab tilt function is discussed here.

US, A, 3,706,470 discloses a control system for a truck having a tilt-type cab, wherein the cab is tilted by means of hydraulic pressure. The system includes first and second control mechanisms and an hydraulically operated latch mechanism. An operator may here unlatch the cab and raise it using the first control mechanism. However, the second control mechanism is capable of overriding the first control mechanism with respect to the latch mechanism, such that an authorized operator can latch the cab in a position from which it cannot be raised by the first control mechanism. Thus, an improved security is attained. Nevertheless, a faulty second control mechanism may render it entirely impossible to raise the cab.

US, A, 4,440,252 shows a truck cab hydraulic tilting mechanism, wherein a key-operated valve controls the movement of a hydraulic working cylinder, via a circuit means and an associated by-pass line, such that only individuals with access to a valid key may tilt the cab. Since, however, the key is of conventional mechanical design, it is a relatively undemanding task to illicitly manipulate the key-operated valve by other means than the valid key.

The Korean patent application KR 2003-0076798 A, which is the closest prior art to claims 1 and 7, describes a system for controlling a tilting function in respect of a cab of a motor vehicle. This system provides that a start-up key of the motor vehicle includes a transponder which is adapted to generate a digital code due to electrical energy received from the vehicle when the key is inserted into a receiver ring of the vehicle. The digital code is then decoded in the receiver ring and transmitted to a vehicle control unit, where it is compared with an encrypted code stored in said control unit. If it is judged that the encrypted code is valid, i.e. when the key is identified as a verified key, the cab is allowed to tilt.

The PCT publication WO 97/30874 A1 describes a motor vehicle anti-theft system and method having a key with a transponder. The system also includes an immobilizer function. When the key is inserted in a receptacle the transponder is activated and transmits an identification code to a control unit of the immobilizer. The control unit compares a pre-determined identification code stored therein with the received identification code and permits starting of the vehicle if the identification codes coincide. When the key is turned, the system allows a direct communication between a motor control unit and the key transponder to start the engine.

Hence, various electro-mechanical solutions already exist for obstructing unauthorized tilting of the driver's cab of a vehicle. However there is yet no satisfying solution, which on one hand renders it possible to efficiently control the access to a heavy vehicle's most sensitive units, and on the other hand, minimizes the risk that an actually authorized person is prevented from accessing these units.

### SUMMARY OF THE INVENTION

The object of the present invention is therefore to provide a solution, which solves the above-mentioned problem, and thus offers a reliable and failsafe access control to a vehicle space located under a driver's cab.

This object is attained by a system according to claim 1 and a method according to claim 7.

According to one aspect of the invention the key verification means is adapted to generate a first data message representing an encrypted challenge. The key means, in turn, is adapted to receive the first data message, and in response thereto produce a second data message representing an encrypted response. The key verification means is further adapted to test the acceptance criterion based on the encrypted response. Provided that the acceptance criterion is fulfilled, the key verification means is adapted to transmit a permit signal to the tilt control means. The permit signal enables the tilt control means to generate a first control signal, such that a tilting of the cab relative to a frame of the vehicle is accomplished.

An important advantage attained by this system is that, due to the proposed encryption challenge, any unauthorized access to the space below the cab is efficiently prevented. At the same time, a faulty tilt control means need not influence the operation of unrelated vehicles functions, such as the immobilizer. Thus, the vehicle's so-called up time is not affected.

According to the invention, the tilt control means is adapted to start a timer in connection with a wake-up procedure in respect of the tilt control means. Then, at expiry of the timer (preferably after a relatively long period), the tilt control means is adapted to investigate whether a permit signal has been received. If it is found that no such signal has been received, the tilt control means is adapted to enable the generation of the first control signal. Hence, after expiry of the timer, a cab tilt is made possible and the space under the cab can ultimately be accessed also in case the key means, the above-mentioned control unit and/or the key verification means is defective.

According to one embodiment of this aspect of the invention, the key verification means is adapted to generate the first data message in response to the key means being inserted in a key reception aperture in the vehicle. Thus, a user-friendly interaction is provided.

According to another embodiment of this aspect of the invention, the tilt control means and the key verification means are adapted to communicate via a data bus, e.g. having a serial interface. Thereby, the units can be interconnected in a cost-efficient and reliable manner.

According to still another embodiment of this aspect of the invention, the key verification means is included in a control unit being connected to a number of other control units in the vehicle. Provided that the acceptance criterion is found to be fulfilled, the control unit is adapted to transmit a second control signal to an engine control unit. This second control signal enables the engine control unit to allow a drive engine of the vehicle to be started. Namely, such a joint coordination is desirable from a design point-of-view. However, it is worth noting that, for example a faulty tilt control means does not prevent the vehicle from being started, provided of course, that the key means and the engine control unit operate as intended.

According to another aspect of the invention, the object is achieved by a motor vehicle according to claim 6, which includes the above-proposed system.

According to still another aspect of the invention, the object is achieved by a method according to claim 7, wherein a first data message is generated, which represents an encrypted challenge. The method further involves receiving the first data message in the key means, and generating therein a second data message in response to the first data message. The second data message represents an encrypted response, which may be based on an identity file associated with the key means. The acceptance criterion is tested based on the encrypted response and if the acceptance criterion is fulfilled a permit signal is transmitted to the tilt control means. The permit signal enables the tilt control means to generate the first control signal, thus allowing the cab to be tilted.

The advantages of this method, as well as the preferred embodiments thereof, are apparent from the discussion hereinabove with reference to the proposed system.

According to a further aspect of the invention the object is achieved by a computer program directly loadable into the internal memory of a computer, comprising software for controlling the above proposed method when said program is run on a computer.

According to another aspect of the invention the object is achieved by a computer readable medium, having a program recorded thereon, where the program is to make a computer control the above proposed method.

### BRIEF DESCRIPTION OF THE DRAWINGS

The present invention is now to be explained more closely by means of embodiments, which are disclosed as examples, and with reference to the attached drawings.
- Figure 1: schematically shows a motor vehicle which includes a system according to one embodiment of the invention,
- Figure 2: shows a block diagram over the system itself according to one embodiment of the invention, and
- Figure 3: shows a flow diagram which illustrates the general method according to the invention.

### DESCRIPTION OF EMBODIMENTS OF THE INVENTION

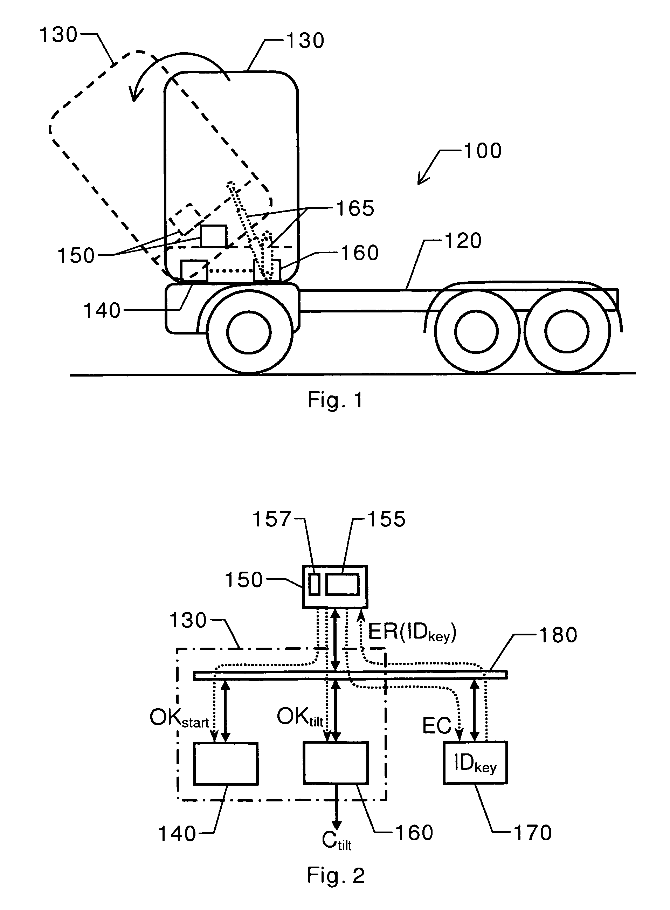

We refer initially to figure 1, which shows a motor vehicle in the form of a truck 100 with a tiltable driver's cab 130. The vehicle 100 also includes a tilt control means 160 adapted to generate a first control signal. The first control signal accomplishes a tilting of the cab 130 relative to a frame 120 of the vehicle 100, e.g. by influencing a hydraulic mechanism. However, such tilting can only be effected if a valid key means is inserted in a key reception aperture (such as the standard starter key slot). In order to authenticate the key means a key verification means is provided, which will be described below with reference to figure 2.

According to one preferred embodiment of the invention, the key verification means is included in a control unit 150, which is connected to a number of other control units in the vehicle 100. The control unit 150 may either be located in the cab 130, or in a space under the cab 130, such that the control unit 150 only can be accessed when the cab 130 is tilted. Nevertheless, according to the invention, at least one of the control unit 150 and an engine control unit 140 is located in said space under the cab 130. Thereby, since a valid key means must be combined with the engine control unit 140 under coordination by the control unit 150, only authorized personnel gain operational access to the vehicle's 100 start function so that the vehicle actually can be started. Specifically, according to one preferred embodiment of the invention, the control unit 150 is adapted to transmit a control signal OKₛₜₐᵣₜ to the engine control unit 140 to indicate that a start acceptance criterion has been fulfilled, and that the vehicle's 100 drive engine (not shown) may be started.

Preferably the tilt control means 160, as well as other important units (symbolized by means of a dotted line), are likewise arranged in said space under the cab 130.

Figure 2 shows a block diagram over a system according to one embodiment of the invention including the units 140, 150 and 160 briefly described above. In this example, these units are connected to a data bus 180 via which they may communicate with one another. It is desirable if the data bus 180 has a serial interface, e.g. in agreement with any of the following automotive industry standards for controlling units and processes in the vehicles: Controller Area Network (CAN), Time Triggered CAN (TTCAN), FlexRay, Media Oriented System Transport (MOST) and ByteFlight. Namely, by means of such a network, resources from two or more ECUs may be combined to accomplish a very large number of vehicle functions based on relatively few electronic control units (ECUs), and thus an efficient over-all vehicular design is obtainable.

Preferably, a key reception aperture for a key means 170 is also connected to the bus 180, so that a key means 170 inserted in this aperture may exchange information with the control unit 150 and a key verification means 155 therein. It is likewise advantageous if the control unit 150 includes an internal memory 157 adapted to store a computer program containing software for controlling a below proposed procedure when the program is run on a computer of the control unit 150. Analogous to above, at least one of the units 150, 140 and 160 are located under the cab 130. In this example, we assume that the engine control unit 140 and the tilt control means 160 are arranged under the cab 130. However, also the control unit 150 may be located in this space.

According to the invention, the key verification means 155 is adapted to authenticate the key means 170 by testing whether the key means 170 fulfills an acceptance criterion. If the acceptance criterion is found to be fulfilled, the key verification means 155 is adapted to enable the tilt control means 160 to generate a first control signal Cₜᵢₗₜ. The first control signal Cₜᵢₗₜ, in turn, accomplishes the above-mentioned tilting of the cab 130, e.g. by influencing a hydraulic, a pneumatic or a gear mechanism.

Specifically, upon insertion of a key means 170 into the key reception aperture, the key verification means 155 generates a first data message EC that represents an encrypted challenge, and transmits this message over the bus 180 to the key means 170. When the key means 170 receives the first data message EC, the key means 170 produces a second data message, which represents an encrypted response ER(ID_{key}), and transmits the second data message to the key verification means 155. In order to generate the encrypted response ER(ID_{key}), the key means 170 includes a soft-, firm- or hardware designating a key identity ID_{key}. Thus, the encrypted response ER(ID_{key}) may be generated on the basis of the first data message EC and the identity ID_{key}, so that the ER(ID_{key}) represents a unique combination of the first data message EC and the identity ID_{key}.

After having received the encrypted response ER(ID_{key}), the key verification means 155 tests the acceptance criterion on the basis thereof, for instance by comparing the encrypted response ER(ID_{key}) with a control parameter produced from the first data message EC. In response to a fulfilled acceptance criterion, the key verification means 155 transmits a permit signal OKₜᵢₗₜ over the bus 180 to the tilt control means 160. The permit signal OKₜᵢₗₜ enables the tilt control means 160 to generate the first control signal Cₜᵢₗₜ, i.e. if the tilt control means 160 receives a user-generated tilt command.

In order to allow physical access to the space under the cab 130 also in case the key means 170, the key verification means 155 and/or the control unit 150 is defective (and thus the above-described exchange of the first and second data messages cannot be completed), the tilt control means 160 is associated with a timer. The tilt control means 160 is further adapted to start the timer in connection with a wake-up procedure, typically initiated by a supply voltage being fed to the tilt control means 160 as the result of a key being inserted into the key reception aperture. Then, upon expiry of the timer (typically after several hours), the tilt control means 160 investigates whether a permit signal OKₜᵢₗₜ has been received, i.e. resulting from an encrypted response ER(ID_{key}) fulfilling the acceptance criterion. If, at this point in time, no such permit signal OKₜᵢₗₜ has been received, the tilt control means 160 allows the first control signal Cₜᵢₗₜ to be generated in response to a user-generated tilt command (i.e. even if no permit signal OKₜᵢₗₜ has been received).

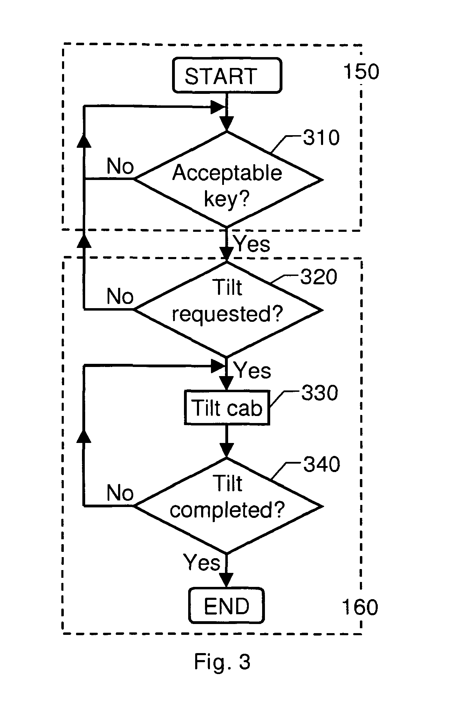

In order to sum up, the general method according to the invention for initiating and completing a tilt procedure will now be described with reference to the flow diagram of figure 3.

A first step 310 tests whether a key means fulfilling the acceptance criterion has been inserted into a relevant key reception aperture. According to the invention, this testing involves generating a first data message representing an encrypted challenge, and in response thereto, generating in the key means a second data message, which represents an encrypted response.

If it is found that the second data message from the key means does not fulfill the acceptance criterion, the procedure loops back and stays in the step 310. If, however, the second data message is acceptable, a step 320 follows. This is equivalent to enabling the first control signal Cₜᵢₗₜ to be generated (i.e. the signal that is adapted to accomplish the tilting).

The step 320 investigates whether a tilt operation has been requested, and if so, a step 330 follows. Otherwise, the procedure loops back to the step 310 again. Thus, the above-mentioned permit signal OKₜᵢₗₜ is transmitted to the tilt control means 160 when entering the step 320. However, before a tilting procedure actually can be initiated a user-generated tilt command must also be received. This is tested in the step 320, and if such a command is received, the step 330 effects the cab tilting. A step 340 thereafter tests whether the tilting has been completed. Typically, this is equivalent to that an end angle has been reached. However, naturally, the use may also choose to abort the tilting procedure at any earlier stage. Nevertheless, if the tilting is found to be completed, the procedure ends. Otherwise, the procedure loops back to the step 330.

All of the process steps, as well as any sub-sequence of steps, described with reference to the figure 3 above may be controlled by means of a programmed computer apparatus. Moreover, although the embodiments of the invention described above with reference to the drawings comprise computer apparatus and processes performed in computer apparatus, the invention thus also extends to computer programs, particularly computer programs on or in a carrier, adapted for putting the invention into practice. The program may be in the form of source code, object code, a code intermediate source and object code such as in partially compiled form, or in any other form suitable for use in the implementation of the process according to the invention. The carrier may be any entity or device capable of carrying the program. For example, the carrier may comprise a storage medium, such as a Flash memory, a ROM (Read Only Memory), for example a CD (Compact Disc) or a semiconductor ROM, an EPROM (Erasable Programmable Read-Only Memory), an EEPROM (Electrically Erasable Programmable Read-Only Memory), or a magnetic recording medium, for example a floppy disc or hard disc. Further, the carrier may be a transmissible carrier such as an electrical or optical signal which may be conveyed via electrical or optical cable or by radio or by other means. When the program is embodied in a signal which may be conveyed directly by a cable or other device or means, the carrier may be constituted by such cable or device or means. Alternatively, the carrier may be an integrated circuit in which the program is embedded, the integrated circuit being adapted for performing, or for use in the performance of, the relevant processes.

The invention is not restricted to the described embodiments in the figures, but may be varied freely within the scope of the claims.

## Claims

1. A system for controlling a tilting function in respect of a cab (130) of a motor vehicle (100), the system comprising:
a tilt control means (160) adapted to generate a first control signal (Cₜᵢₗₜ) for accomplishing a tilting of the cab (130) relative to a frame (120) of the vehicle (100), and
a key verification means (155) adapted to authenticate a key means (170) by testing whether the key means (170) fulfills an acceptance criterion, and if the acceptance criterion is found to be fulfilled, enable the tilt control means (160) to generate the first control signal (Cₜᵢₗₜ), wherein
the key verification means (155) is adapted to generate a first data message (EC) representing an encrypted challenge,
the key means (170) is adapted to receive the first data message (EC) and in response thereto produce a second data message representing an encrypted response (ER(ID_{key})), and
the key verification means (155) is further adapted to test the acceptance criterion based on the encrypted response (ER(ID_{key})), and in response to a fulfilled acceptance criterion transmit a permit signal (OKₜᵢₗₜ) to the tilt control means (160), the permit signal (OKₜᵢₗₜ) enabling the tilt control means (160) to generate the first control signal (Cₜᵢₗₜ), wherein the tilt control means (160) is adapted to:
start a timer in connection with a wake-up procedure in respect of the tilt control means (160),
investigate whether, at expiry of the timer, no permit signal (OKₜᵢₗₜ) has been received, and if so
enable the generation of the first control signal (Cₜᵢₗₜ).

2. The system according to claim 1, **characterized in that** the key verification means (155) is adapted to generate the first data message (EC) in response to the key means (170) being inserted in a key reception aperture in the vehicle (100).

3. The system according to any of the claims 1 or 2, **characterized in that** the tilt control means (160) and the key verification means (155) are adapted to communicate via a data bus (180).

4. The system according to claim 3, **characterized in that** the data bus (180) has a serial interface.

5. The system according to any one of the preceding claims, **characterized in that** the key verification means (155) is included in a control unit (150) connected to a number of other control units in the vehicle (100), provided that the acceptance criterion is found to be fulfilled, the control unit (150) is adapted to transmit a second control signal (OKₛₜₐᵣₜ) to an engine control unit (140), the second control signal (OKₛₜₐᵣₜ) enabling the engine control unit (140) to allow a drive engine of the vehicle (100) to be started.

6. A motor vehicle (100), **characterized in that** it comprises the system according to any one of the claims 1 to 5.

7. A method of controlling a cab-tilting mechanism for tilting a cab (130) relative to a frame (120) of a motor vehicle (100), the method comprising:
testing whether a key means (170) fulfills an acceptance criterion, and if so
enabling generation of a first control signal (Cₜᵢₗₜ) adapted to accomplish the tilting, **characterized by**
generating a first data message (EC) representing an encrypted challenge,
receiving the first data message (EC) in the key means (170),
generating, in the key means (170), a second data message in response to the first data message (EC), the second data message representing an encrypted response (ER(ID_{key})),
testing the acceptance criterion based on the encrypted response (ER(ID_{key})), and if the acceptance criterion is fulfilled
transmitting a permit signal (OKₜᵢₗₜ) to the tilt control means (160), the permit signal (OKₜᵢₗₜ) enabling the tilt control means (160) to generate the first control signal (Cₜᵢₗₜ)
starting a timer in connection with a wake-up procedure,
investigating whether, at expiry of the timer, no permit signal (OKₜᵢₗₜ) has been received, and if so
enabling the generation of the first control signal (Cₜᵢₗₜ).

8. The method according to claim 7, **characterized by** generating the first data message (EC) in response to the key means (170) being inserted in a key reception aperture in the vehicle (100).

9. The method according to any one of the claims 7 or 8, **characterized by** transmitting a second control signal (OKₛₜₐᵣₜ) to an engine control unit (140) if the acceptance criterion is ful-filled, the second control signal (OKₛₜₐᵣₜ) enabling the engine control unit (140) to allow a drive engine of the vehicle (100) to be started.

10. A computer program directly loadable into the internal memory (157) of a computer, comprising software for controlling the steps of any of the claims 7 to 9 when said program is run on the computer.

11. A computer readable medium, having a program recorded thereon, where the program is to make a computer control the steps of any of the claims 7 to 9.

## Patentansprüche

1. System zum Steuern einer Neigungsfunktion für eine Kabine (130) eines Kraftfahrzeugs (100), wobei das System aufweist:
Neigungssteuerungsmittel (160), das zum Erzeugen eines ersten Steuerungssignals (C_{Neigung}) zum Ausführen der Neigung der Kabine (130) relativ zu einem Rahmen (120) des Fahrzeugs (100) ausgebildet ist,
Schlüsselidentifikationsmittel (155), das zum Identifizieren eines Schlüsselmittels (170) durch Prüfen, ob das Schlüsselmittel (170) ein Identifikationsmerkmal erfüllt, ausgebildet ist, und falls das Identifikationsmerkmal als erfüllt festgestellt wird, die Erzeugung des ersten Steuerungssignals (C_{Neigung}) durch das Neigungssteuerungsmittel (160) zulässt, wobei
das Schlüsselidentifikationsmittel (155) zum Erzeugen einer ersten Datennachricht (EC) ausgebildet ist, die eine verschlüsselte Anfrage darstellt,
wobei das Schlüsselmittel (170) zum Empfangen der ersten Datennachricht (EC) ausgebildet ist und in Antwort darauf eine zweite Datennachricht erzeugt, die eine verschlüsselte Antwort (ER(ID_{Schlüssel})) darstellt, und
wobei das Schlüsselidentifikationsmittel (155) ferner dazu ausgebildet ist, das Identifikationsmerkmal basierend auf der verschlüsselten Antwort (ER(ID_{Schlüssel})) zu prüfen, und in Antwort auf ein erfülltes Identifikationsmerkmal ein Freigabesignal (OK_{Neigung}) an das Neigungssteuerungsmittel (160) zu übertragen, wobei das Freigabesignal (OK_{Neigung}) die Erzeugung eines ersten Steuerungssignals (C_{Neigung}) durch das Neigungssteuerungsmittel (160) zulässt, wobei
das Neigungssteuerungsmittel (160) dazu ausgebildet ist:
einen Zeitgeber in Verbindung mit einem Aufwachverfahren bezüglich des Neigungssteuerungsmittels (160) zu starten,
zu prüfen, ob nach Ablauf des Zeitgebers kein Freigabesignal (OK_{Neigung}) empfangen wurde, und falls dies zutrifft,
die Erzeugung des ersten Steuerungssignals (C_{Neigung}) zuzulasssen.

2. System nach Anspruch 1,
**dadurch gekennzeichnet, dass** das Schlüsselidentifikationsmittel (150) zum Erzeugen der ersten Datennachricht (EC) in Antwort auf das Einführen des Schlüsselmittels (170) in eine Schlüsselaufnahmeöffnung in dem Fahrzeug (100) ausgebildet ist.

3. System nach einem der Ansprüche 1 oder 2,
**dadurch gekennzeichnet, dass** das Neigungssteuerungsmittel (116) und das Schlüsselidentifikationsmittel (150) zur Kommunikation über einen Datenbus (180) ausgebildet sind.

4. System nach Anspruch 3,
**dadurch gekennzeichnet, dass** der Datenbus (180) eine serielle Schnittstelle ist.

5. System nach einem der voranstehenden Ansprüche,
**dadurch gekennzeichnet, dass** eine Steuereinheit (150) das Schlüsselidentifikationsmittel (155) umfasst, wobei die Steuereinheit (150) mit einer Mehrzahl von anderen Steuereinheiten in dem Fahrzeug (100) verbunden ist, wobei dann, wenn das Identifikationsmerkmal als erfüllt angesehen wird, die Steuereinheit (150) zum Übertragen eines zweiten Steuerungssignals (OK_{Start}) an eine Motorsteuereinheit (140) ausgebildet ist, wobei das zweite Steuerungssignal (OK_{Start}) der Motorsteuereinheit (140) erlaubt, das Starten eines Antriebsmotors des Fahrzeugs (100) zuzulassen.

6. Kraftfahrzeug (100),
**dadurch gekennzeichnet, dass** es das System nach einem der Ansprüche 1 bis 5 aufweist.

7. Verfahren zum Steuern eines Kabinenneigungsmechanismus zum Neigen einer Kabine (130) relativ zu einem Rahmen (120) eines Kraftfahrzeugs (100), wobei das Verfahren aufweist:
Prüfen, ob ein Schlüsselmittel (170) ein Identifikationsmerkmal erfüllt, und wenn dies der Fall ist,
Zulassen der Erzeugung eines ersten Steuerungssignals (C_{Neigung}), das zum Ausführen der Neigung ausgebildet ist,
**gekennzeichnet durch**
Erzeugen einer ersten Datennachricht (EC), die eine verschlüsselte Anfrage darstellt,
Empfangen der ersten Datennachricht (EC) in dem Schlüsselmittel (170),
Erzeugen einer zweiten Datennachricht in dem Schlüsselmittel (170) in Antwort auf die erste Datennachricht (EC), wobei die zweite Datennachricht eine verschlüsselte Antwort (ER(ID_{Schlüssel})) darstellt,
Prüfen des Identifikationsmerkmals basierend auf der verschlüsselten Antwort (ER(ID_{Schlüssel})) und, falls das Identifikationsmerkmal erfüllt ist,
Übertragen eines Freigabesignals (OK_{Neigung}) zu dem Neigungssteuerungsmittel (160), wobei das Freigabensignal (OK_{Neigung}) dem Neigungssteuerungsmittel (160) erlaubt, das erste Steuerungssignal (C_{Neigung}) zu erzeugen,
Starten eines Zeitgebers in Verbindung mit einem Aufwachverfahren,
Prüfen, ob nach Ablauf des Zeitgebers kein Freigabesignal (OK_{Neigung}) empfangen wurde, und dann, wenn dies der Fall ist,
Zulassen der Erzeugung des ersten Steuerungssignals (C_{Neigung}).

8. Verfahren nach Anspruch 7,
**dadurch gekennzeichnet, dass** die erste Datennachricht (EC) in Antwort auf das Einführen des Schlüsselmittels (170) in eine Schlüsselaufnahmeöffnung in dem Fahrzeug (100) erzeugt wird.

9. Verfahren nach einem der Ansprüche 7 oder 8,
**gekennzeichnet durch** Übertragen eines zweiten Steuerungssignals (OK_{Start}) an eine Motorsteuereinheit (140), falls das Identifikationsmerkmal erfüllt ist, wobei das zweite Steuerungssignal (OK_{Start}) der Motorsteuereinheit (140) erlaubt, das Starten eines Antriebsmotors des Fahrzeugs (100) zuzulassen.

10. Direkt in einen internen Speicher (157) eines Computers speicherbares Computerprogramm, aufweisend eine Software zum Steuern der Schritte nach einem der Ansprüche 7 bis 9, wenn das Programm auf dem Computer ausgeführt wird.

11. Computerlesbares Medium mit einem darauf gespeicherten Programm, wobei das Programm einen Computer zum Steuern der Schritte nach einem der Ansprüche 7 bis 9 veranlasst.

## Revendications

1. Système de commande d'une fonction de basculement d'une cabine (130) d'un véhicule motorisé (100), le système comprenant :
un moyen de commande de basculement (160) adapté à générer un premier signal de commande (Cₜᵢₗₜ) pour réaliser un basculement de la cabine (130) par rapport à un châssis (120) du véhicule (100), et
un moyen de vérification de clef (155) adapté à authentifier un moyen de clef (170) en testant si le moyen de clef (170) satisfait à un critère d'acceptation, et si le critère d'acceptation s'avère être satisfait, à permettre que le moyen de commande de basculement (160) génère le premier signal de commande (Cₜᵢₗₜ), dans lequel
le moyen de vérification de clef (155) est adapté à générer un premier message de données (EC) représentant une demande d'accès cryptée,
le moyen de clef (170) est adapté à recevoir le premier message de données (EC) et en réponse à celui-ci à produire un deuxième message de données représentant une réponse cryptée (ER(ID_{key})), et
le moyen de vérification de clef (155) est en outre adapté à tester le critère d'acceptation sur la base de la réponse cryptée (ER(ID_{key})), et en réponse à un critère d'acceptation satisfait, à transmettre un signal d'autorisation (OKₜᵢₗₜ) au moyen de commande de basculement (160), le signal d'autorisation (OKₜᵢₗₜ) permettant que le moyen de commande de basculement (160) génère le premier signal de commande (Cₜᵢₗₜ), dans lequel
le moyen de commande de basculement (160) est adapté à :
déclencher un temporisateur en connexion avec une procédure de réveil du moyen de commande de basculement (160),
rechercher si, à l'expiration du temporisateur, aucun signal d'autorisation (OKₜᵢₗₜ) n'a été reçu, et si tel est le cas
permettre la génération du premier signal de commande (Cₜᵢₗₜ).

2. Système selon la revendication 1, **caractérisé en ce que** le moyen de vérification de clef (155) est adapté à générer le premier message de données (EC) en réponse au moyen de clef (170) étant inséré dans une ouverture de réception de clef dans le véhicule (100).

3. Système selon l'une quelconque des revendications 1 ou 2, **caractérisé en ce que** le moyen de commande de basculement (160) et le moyen de vérification de clef (155) sont adaptés à communiquer par l'intermédiaire d'un bus de données (180).

4. Système selon la revendication 3, **caractérisé en ce que** le bus de données (180) a une interface série.

5. Système selon l'une quelconque des revendications précédentes, **caractérisé en ce que** le moyen de vérification de clef (155) est inclus dans une unité de commande (150) connectée à un certain nombre d'autres unités de commande dans le véhicule (100), sous réserve que le critère d'acceptation s'avère être satisfait, l'unité de commande (150) est adaptée à transmettre un deuxième signal de commande (OKₛₜₐᵣₜ) à une unité de commande moteur (140), le deuxième signal de commande (OKₛₜₐᵣₜ) permettant que l'unité de commande moteur (140) laisse un moteur d'entraînement du véhicule (100) être démarré.

6. Véhicule motorisé (100), **caractérisé en ce qu'**il comprend le système selon l'une quelconque des revendications 1 à 5.

7. Procédé de commande d'un mécanisme de basculement de cabine pour basculer une cabine (130) par rapport à un châssis (120) d'un véhicule motorisé (100), le procédé comprenant :
le test si un moyen de clef (170) satisfait à un critère d'acceptation, et si tel est le cas
l'autorisation de génération d'un premier signal de commande (Cₜᵢₗₜ) adapté à réaliser le basculement, **caractérisé par**
la génération d'un premier message de données (EC) représentant une demande d'accès cryptée,
la réception du premier message de données (EC) dans le moyen de clef (170),
la génération, dans le moyen de clef (170), d'un deuxième message de données en réponse au premier message de données (EC), le deuxième message de données représentant une réponse cryptée (ER(ID_{key})),
le test du critère d'acceptation sur la base de la réponse cryptée (ER(IDkey)), et, si le critère d'acceptation est satisfait
la transmission d'un signal d'autorisation (OKₜᵢₗₜ) au moyen de commande de basculement (160), le signal d'autorisation (OKₜᵢₗₜ) permettant que le moyen de commande de basculement (160) génère le premier signal de commande (Cₜᵢₗₜ),
le déclenchement d'un temporisateur en connexion avec une procédure de réveil,
la recherche si, à l'expiration du temporisateur, aucun signal d'autorisation (OKₜᵢₗₜ) n'a été reçu, et si tel est le cas
l'autorisation de génération du premier signal de commande (Cₜᵢₗₜ).

8. Procédé selon la revendication 7, **caractérisé par** la génération du premier message de données (EC) en réponse au moyen de clef (170) étant inséré dans une ouverture de réception de clef dans le véhicule (100).

9. Procédé selon l'une quelconque des revendications 7 ou 8, **caractérisé par** la transmission d'un deuxième signal de commande (OKₛₜₐᵣₜ) à une unité de commande moteur (140) si le critère d'acceptation est satisfait, le deuxième signal de commande (OKₛₜₐᵣₜ) permettant que l'unité de commande moteur (140) laisse un moteur d'entraînement du véhicule (100) être démarré.

10. Programme informatique directement chargeable dans la mémoire interne (157) d'un ordinateur, comprenant un logiciel pour commander les étapes de l'une quelconque des revendications 7 à 9 lorsque ledit programme est exécuté sur l'ordinateur.

11. Support lisible par un ordinateur, ayant un programme enregistré sur celui-ci, où le programme sert à ce qu'un ordinateur commande les étapes de l'une quelconque des revendications 7 à 9.
